## Europäisches Patentamt

## European Patent Office

## Office européen des brevets

(11) Veröffentlichungsnummer: **0 072 875**
**B1**

(12) # EUROPÄISCHE PATENTSCHRIFT

(45) Veröffentlichungstag der Patentschrift:
04.12.85

(51) Int. Cl.⁴: **B 01 F  5/06,** F 28 F  25/08,
B 01 D  53/18, B 01 D  53/20,
B 01 D  3/24

(21) Anmeldenummer: 81106615.8

(22) Anmeldetag: 26.08.81

(54) Einbauelement für eine Vorrichtung für Stoff-und direkten Wärmeaustausch und Mischen.

(30) Priorität: 30.07.81  CH 4924/81

(43) Veröffentlichungstag der Anmeldung:
02.03.83 Patentblatt 83/9

(45) Bekanntmachung des Hinweises auf die Patenterteilung:
04.12.85 Patentblatt 85/49

(84) Benannte Vertragsstaaten:
DE FR GB IT NL SE

(56) Entgegenhaltungen:
DE - A - 1 501 375
DE - A - 2 942 481
FR - A - 2 086 365
US - A - 3 266 787

(73) Patentinhaber: GEBRÜDER SULZER
AKTIENGESELLSCHAFT, Zürcherstrasse 9,
CH-8401 Winterthur (CH)

(72) Erfinder: Plüss, Raymond, Einfangstrasse 182,
CH-8450 Klein-Andelfingen (CH)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)

## Beschreibung

Die Erfindung betrifft ein Einbauelement für eine Vorrichtung zum Stoff- und/oder direkten Wärmeaustausch oder Mischen von mindestens zwei Komponenten, bestehend aus Lagen, wobei jede Lage ein zickzackartiges, zusammenhängendes Gebilde ist und aneinander angrenzende miteinander durch Verbindungsbrücken verbundene Reihen von in den Flankenebenen der Zacken liegenden Leitflächen aufweist.

Ein derartiges Einbauelement ist beispielsweise aus der DE-A-1 501 375 insbesondere für Kühltürme bekannt. Hierbei soll das Einbauelement zwar auch aus zickzackförmigen, Leitelemente bildenden Lagen zusammengefügt sein. Das Einbauelement wird dadurch gebildet, daß die zickzackförmigen Lagen in an sich üblicher Weise senkrecht in einem Kühlturm angeordnet sind, wobei die Platten bei der Montage in Querrichtung ineinander geschoben werden sollen. Hierdurch wird eine zickzackförmige Umlenkung der abwärtsrieselnden Flüssigkeit bewirkt, da die Strömungskanäle von den zickzackförmig geformten Platten eingegrenzt sind.

Aus der FR-A-2 086 365 sind Einbauelemente für Kolonnen bekannt, wobei die Einbauelemente auch aus zickzackförmigen Lagen gebildet sein sollen. In den Flanken der Zacken sind rechteckige Leitelemente an drei Seiten ausgestanzt und aus den Flankenebenen herausgebogen. Hierbei liegen die hierdurch entstandenen Öffnungen auf den beiden Flankenseiten der einzelnen Zacken sich gegenüber, so daß bei dem, aus den Lagen zusammengefügten Einbauelement keine sich kreuzenden Strömungskanäle entstehen können.

Weiterhin sind aus der DE-B-2 328 795 und der DE-B-2 522 106 Einbauelemente für statische Mischer bekannt.

Die Aufgabe der bekannten Einbauelemente besteht hierbei darin, zwei oder mehrere im Gleichstrom fließende Stoffe homogen zu mischen, d. h. bei jedem Mengen- und Zähigkeitsverhältnis der zu mischenden Komponenten eine hochwertige Mischgüte des Endproduktes über den gesamten Strömungsquerschnitt zu erreichen.

Die bisher üblichen Herstellungsverfahren für derartige Einbauelemente sind äußerst aufwendig, insbesondere im Hinblick auf das breite Spektrum der verschiedenen gewünschten Durchmesser.

So erfordern die Einbauelemente, wie sie aus der DE-B-2 328 795 und der DE-B-2 522 106 bekannt sind, und die im ersten Fall aus kreuzweise zusammengestreckten kammartigen Platten und im zweiten Fall aus zusammengefügten Einzelelementen in Art von »spanischen Reitern« bestehen, für jeden Durchmesser spezielle Stanzwerkzeuge.

Demgegenüber hat sich die Erfindung eine Struktur eines Einbauelementes zur Aufgabe gemacht, welche einfach und kostengünstig für jeden gewünschten Durchmesser hergestellt werden kann.

Diese Aufgabe wird gemäß der Erfindung dadurch gelöst, daß in der Leitflächenreihe jede zweite Leitfäche in der Flankenebene der Zacken liegt und die dazwischenliegenden Leitflächen aus der Flankenebene herausragen und diese, in einer Ebene liegend, kreuzen, daß die in der Flankenebene liegenden Leitflächen über in den Tälern und Spitzen der Zacken liegende Verbindungsbrücken miteinander verbunden sind, daß die aus der Flankenebene herausragenden Leitflächen mit im wesentlichen in der Mitte der Flankenebene angeordneten Verbindungsbrücken mit den in der Flankenebene liegenden Leitflächen verbunden sind, und daß die in einer Flankenebene liegenden oder die aus dieser herausragenden Leitflächen benachbarter Reihen gegeneinander um eine Leitflächenbreite versetzt angeordnet sind.

Ein vorteilhaftes Herstellungsverfahren für ein erfindungsgemäßes Einbauelement besteht darin, daß aus einem folienartigen Material eine zickzackförmige Lage von aneinander angrenzenden und miteinander verbundenen Reihen von Leitflächen derart gebildet wird, daß jede zweite Leitfläche einer Leitflächenreihe aus der Lage gestanzt wird, wobei die ausgestanzten Leitflächen von benachbarten Reihen um eine Leitflächenbreite gegeneinander versetzt sind, daß die Lage zickzackförmig verformt wird, so daß die Verbindungsbrücken der benachbarten Leitflächenreihen in den Tälern und Spitzen der Zacken liegen, und daß die ausgestanzten Leitflächen aus den Flankenebenen der Zacken so weit herausgebogen werden, daß ihre Ebenen parallel zur Ebene der nächsten Flanke liegt.

Die Erfindung wird im folgenden anhand eines in der Zeichnung dargestellten Ausführungsbeispiels erläutert.

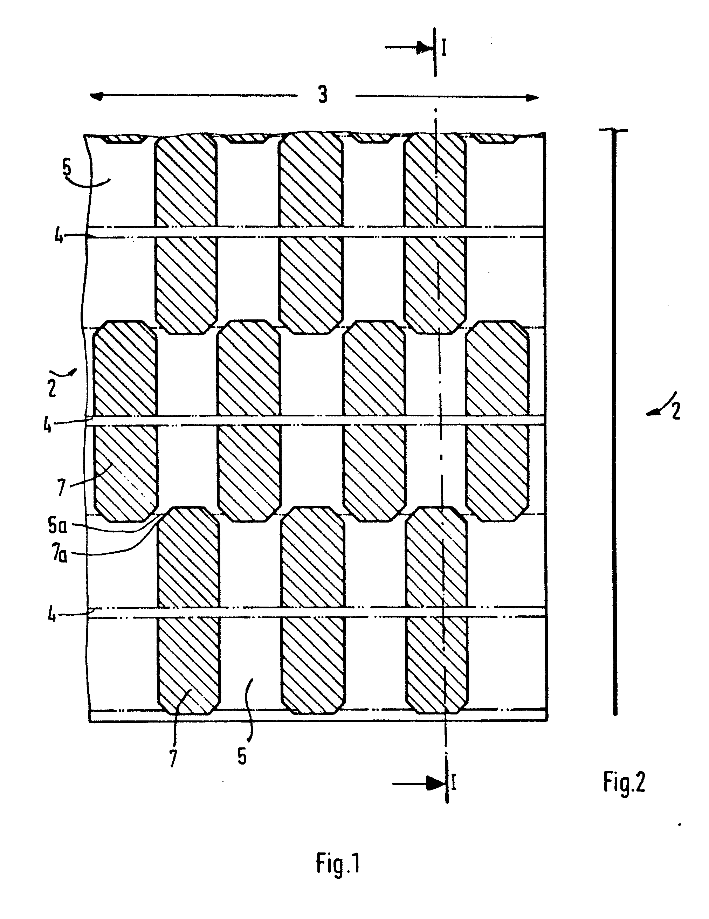

Hierbei zeigt die Fig. 1 einen Grundriß eines Ausschnittes einer Lage im gestanzten Zustand,

Fig. 2 eine Seitenansicht längs der Schnittlinie I-I der Fig. 1,

Fig. 3 eine Aufsicht im ausgebogenen Zustand und

Fig. 4 eine entsprechende Seitenansicht längs der Schnittlinie III-III der Fig. 3,

Fig. 5 einen Grundriß eines Ausschnittes einer abgewandelten Lage im gestanzten Zustand,

Fig. 6 eine Seitenansicht längs der Schnittlinie V-V der Fig. 5 und

Fig. 7 eine perspektivische Darstellung eines Ausschnittes eines aus zwei übereinander angeordneten Lagen gebildeten Einbauelementes.

In den Fig. 1—4 sind die bei der Herstellung entstehenden Formen einer Lage 2 dargestellt.

So zeigt Fig. 1 im Grundriß einen Ausschnitt einer aus einem folienartigen Material, insbesondere Blech, durch Stanzen gebildete Lage 2 im ungebogenen Zustand.

Die Lage 2 weist Reihen 3 von durch Verbindungsbrücken 4 miteinander verbundene Leitflächen 5 und ausgestanzte Leitflächen 7 auf.

Die Leitflächen 5 weisen an ihren Enden Aussparungen 5a auf, welchen die abgeschrägten Enden 7a der gestanzten Leitflächen 7 angepaßt sind, so daß die Enden 5a von benachbarten Leitflächenreihen 3 miteinander verbunden sind.

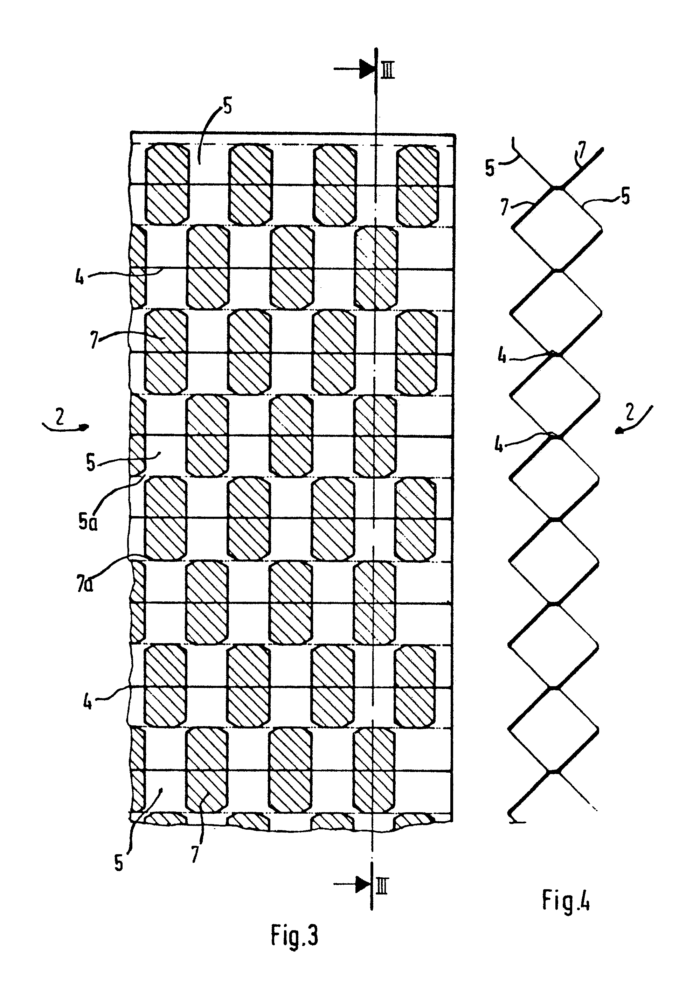

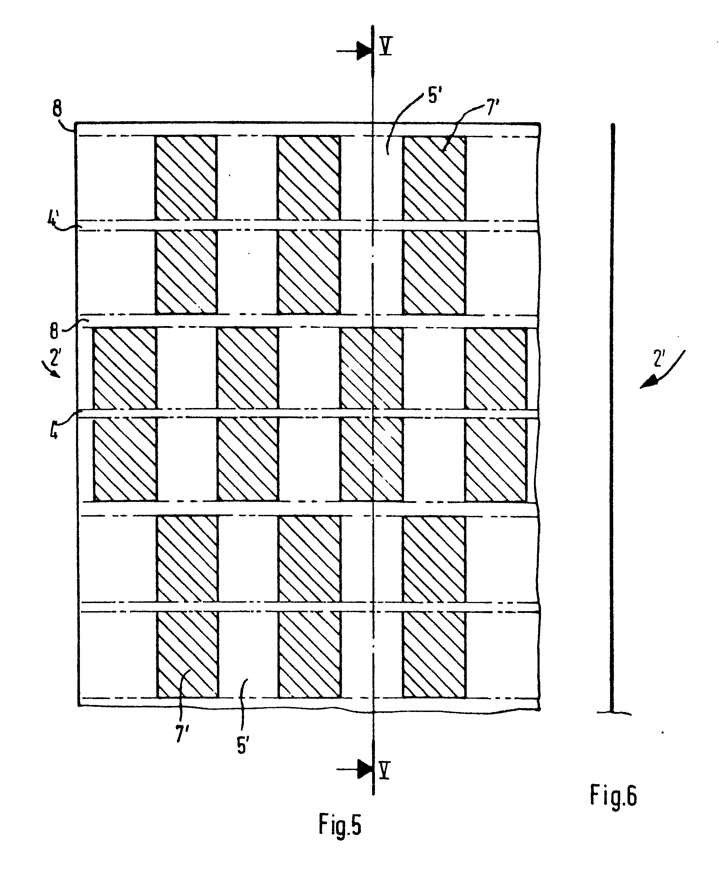

In den Fig. 3 und 4 ist der Ausschnitt der Lage 2 dargestellt, nachdem die ausgestanzten Leitflächen 7 aus der Ebene der Lage 2 ausgebogen sind und anschließend die Lage 2 durch Biegen um die Biegelinien zickzackförmig verformt worden ist, wie aus Fig. 4 ersichtlich ist.

Im vorliegenden Ausführungsbeispiel stehen die Ebenen der ausgebogenen Leitflächen 7 senkrecht zu den in den Flankenebenen liegenden benachbarten Leitflächen. Gegebenenfalls können die ausgestanzten Flächenelemente auch um einen von 90° abweichenden Winkel aus den Flankenebenen der Zacken ausgebogen sein.

Bei einer in den Fig. 5 und 6 in Aufsicht und Seitenansicht dargestellten Ausführungsform einer Lage 2' weisen die gestanzten Leitflächen 7' und die Leitflächen 5' eine identische rechteckige Form auf. In diesem Fall sind die Enden der Leitflächen 5' von benachbarten Reihen durch Verbindungsbrücken 8 miteinander verbunden. Die Lage 2' wird zickzackförmig durch Biegen längs der Verbindungsbrücken 4' und 8 verformt.

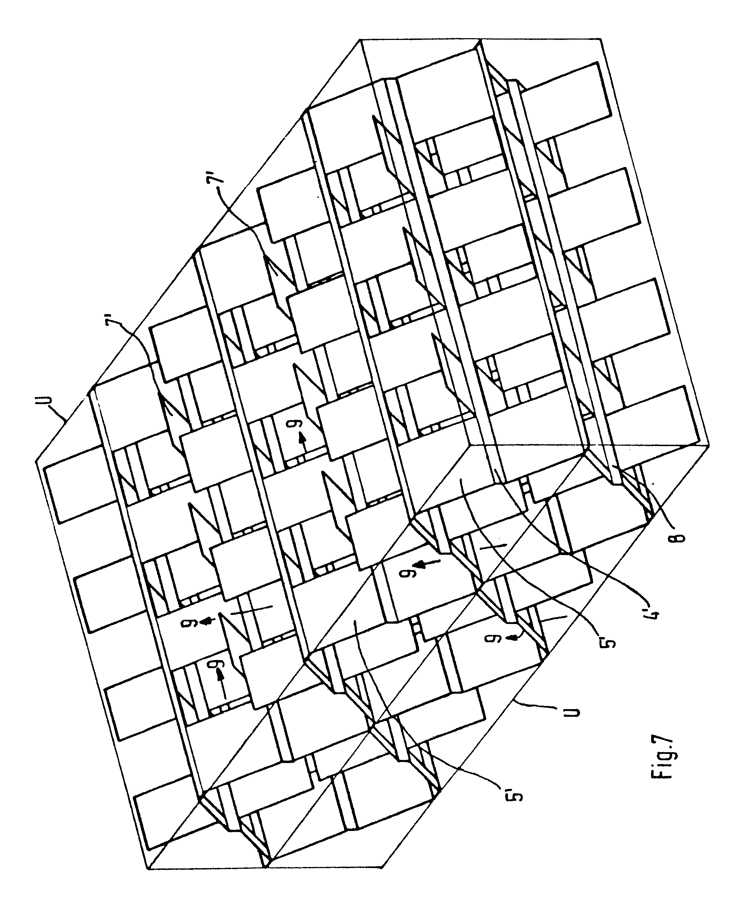

In Fig. 7 ist die Kontur des aus zwei Lagen 2 gemäß Fig. 5 bestehenden Ausschnittes eines Einbauelementes mit den Linien U angedeutet. Hierbei sind die Lagen so aufeinandergelegt, daß die ausgestanzten und die in den Flankenebenen liegenden Leitflächen 7' und 5' jeweils in einer Richtung liegen, derart, daß zwischen den ausgestanzten Leitflächen 7' und den in den Flankenebenen der Zacken liegenden Leitflächen 5' der übereinander angeordneten Lagen 2 sich kreuzende, durchgehende Strömungskanäle 9 gebildet werden.

Das Einbauelement kann auch aus mehreren segmentartig nebeneinanderliegenden Paketen von zwei oder mehr übereinanderliegenden Lagen 2 bestehen, wobei die Kontur des Einbauelementes bzw. der einzelnen Lagen dem Innenumfang der Vorrichtung angepaßt wird.

Eine andere nicht dargestellte Ausführungsform der Erfindung kann darin bestehen, daß mindestens eine Lage auf die benachbarte Lage derart aufgelegt wird, daß die Kanäle zwischen diesen beiden Lagen eine Richtungsänderung aufweisen. In diesem Fall werden diese Lagen beispielsweise durch Verschieben gegeneinander oder Verschwenken um 180° in die entsprechende Stellung gebracht.

## Patentansprüche

1. Einbauelement für eine Vorrichtung zum Stoff- und/oder direkten Wärmeaustausch oder Mischen von mindestens zwei Komponenten, bestehend aus Lagen, wobei jede Lage ein zickzackartiges, zusammenhängendes Gebilde ist und aneinandergrenzende miteinander durch Verbindungsbrücken verbundene Reihen von in den Flankenebenen der Zacken liegenden Leitflächen aufweist, dadurch gekennzeichnet, daß in der Leitflächenreihe (3) jede zweite Leitfläche (5, 5') in der Flankenebene der Zacken liegt und die dazwischen liegenden Leitflächen (7, 7') aus der Flankenebene herausragen und diese, in einer Ebene liegend, kreuzen, daß die in der Flankenebene liegenden Leitflächen (5, 5') über in den Tälern und Spitzen der Zacken liegende Verbindungsbrücken (5a, 8) miteinander verbunden sind, daß die aus der Flankenebene herausragenden Leitflächen (7, 7') mit im wesentlichen in der Mitte der Flankenebene angeordneten Verbindungsbrücken (4, 4') mit den in der Flankenebene liegenden Leitflächen (5, 5') verbunden sind, und daß die in einer Flankenebene liegenden oder die aus dieser herausragenden Leitflächen (5, 5'; 7, 7') benachbarter Reihen (3) gegeneinander um eine Leitflächenbreite versetzt angeordnet sind.

2. Einbauelement nach Anspuch 1, dadurch gekennzeichnet, daß die herausragenden Leitflächen kürzer sind als die in den Flankenebenen liegenden Leitflächen.

3. Einbauelement nach Anspruch 1, dadurch gekennzeichnet, daß die herausragenden Leitflächen (7) gleiche Länge wie die in den Flankenebenen liegenden Leitflächen (5) aufweisen, jedoch Aussparungen (7a) entsprechend den Verbindungsbrücken (5a) der in den Flankenebenen liegenden Leitflächen (5) besitzen (Fig. 1 bis 4).

## Claims

1. A furniture element for an apparatus for mass transfer and/or direct heat exchange of for the mixing of at least two components, in the form of layers, each of which is a zigzag continuous structure and has contiguous bridged-together rows of deflecting or guide surfaces disposed in the flank planes of the zigzag points or tines, characterised in that every other guide surface (5, 5') of the row (3) of guide surfaces is disposed in the flank plane of the tines and the guide surfaces (7, 7') between them project from such plane and cross the same in coplanar fashion; the guide surfaces (5, 5') disposed in the flank plane are interconnected by bridgepieces (5a, 8) disposed in the valleys and tips of the tines; the guide surfaces (7, 7') which project from the flank are connected, by way of bridgepieces (4, 4') disposed substantially in the centre of the flank plane, to the guide surfaces (5, 5') disposed therein; and those guide surfaces (5, 5'; 7, 7') of adjacent rows (3) which are disposed in or project from a flank plane are staggered relatively to one another by the width of one guide surface.

2. A furniture element according to claim 1, characterised in that the projecting guide surfaces are shorter than the guide surfaces disposed in the flank planes.

3. A furniture element according to claim 1, characterised in that the projecting guide surfaces (7) are of the same length as the guide surfaces (5) disposed in the flank planes but are formed with recesses (7a) to correspond to the bridgepieces (5a) ot the guide surfaces (5) disposed in the flank planes (Figs. 1—4).

## Revendications

1. Elément incorporé équipant un dispositif destiné à l'échange direct de matières et/ou de chaleur ou au mélange d'au moins deux composants, constitué par des couches dont chacune est un ensemble cohérent en zigzag et présente des rangées, mutuellement adjacentes et reliées les unes aux autres par des entretoises de liaison, de surfaces déflectrices situées dans les plans des flancs des pans inclinés, caractérisé par le fait que, dans la rangée (3) de surfaces déflectrices, une surface déflectrice (5, 5') sur deux se trouve dans le plan des flancs des pans inclinés, et les surfaces déflectrices intercalaires (7, 7') dépassent au-delà du plan des flancs et croisent ce dernier en étant situées dans un plan; par le fait que les surfaces déflectrices (5, 5') disposées dans le plan des flancs sont reliées les unes aux autres par des entretoises de liaison (5a, 8) placées dans les creux et les crêtes des pans inclinés; par le fait que les surfaces déflectrices (7, 7') dépassant au-delà du plan des flancs sont reliées, par des entretoises de liaison (4, 4') disposées pratiquement au centre du plan des flancs, aux surfaces déflectrices (5, 5') situées dans le plan des flancs; et par le fait que les surfaces déflectrices (5, 5'; 7, 7') de rangées voisines (3), qui sont situées dans un plan de flancs ou dépassent au-delà de ce dernier, sont décalées mutuellement d'une largeur de surface déflectrice.

2. Elément incorporé selon la revendication 1, caractérisé par le fait que les surfaces déflectrices en saillie sont plus courtes que les surfaces déflectrices situées dans les plans des flancs.

3. Elément incorporé selon la revendication 1, caractérisé par le fait que les surfaces déflectrices (7) en saillie présentent la même longueur que les surfaces déflectrices (5) situées dans les plans des flancs, mais possèdent des échancrures (7a) correspondant aux entretoises (5a) de liaison des surfaces déflectrices (5) situées dans les plans des flancs (figures 1 à 4).

Fig.2

Fig.1

Fig.3

Fig.4

Fig.5

Fig.6

Fig.7